# EUROPEAN PATENT APPLICATION

(11) **EP 2 063 551 A2**
(43) Date of publication of application: **27.05.2009**
(21) Application number: 08162141.9
(22) Date of filing: 11.08.2008
(51) Int. Cl.: H04B 7/185

(54) **Device and method of reducing power consumption in gap filler system**

(30) Priority: 20.11.2007 KR 20070118297
(71) Applicant: Electronics and Telecommunications Research Institute, Yuseong-gu Daejon 305-350 (KR)
(72) Inventor: Han, Sung Min, Dong-gu Daejeon (KR); Ryu, Joon Gyu, Daejeon (KR); Chang, Dae Ig, Seo-gu Daejeon (KR); Lee, Ho Jin, Yuseong-gu Daejeon (KR)
(74) Representative: Esslinger, Alexander

(57) **Abstract**

A power consumption reducing device of a gap filler system includes a main module and a plurality of unit modules. The unit modules receive a signal from a terminal and determine whether the terminal is provided in beam coverage. The main module controls at least one unit module, one of which is a first unit module with beam coverage in which a terminal is provided from among a plurality of unit modules, to be turned on, and controls unit modules other than the turned-on unit module to be turned off.

## Description

### BACKGROUND OF THE INVENTION

### (a) Field of the Invention

The present invention relates to a method for reducing power consumption of a gap filler unit module in a gap filler system.

This work was supported by the IT R&D program of MIC/IITA [2006-S-020-02, Development of Satellite and Terrestrial Convergence Technology for Internet Service on High-speed Mobile Vehicles].

### (b) Description of the Related Art

Satellite broadcasting or satellite communication may be received or communicated when a line of sight (LOS) condition is fulfilled, Recently, some satellite broadcasting systems such as the satellite digital multimedia broadcasting (DMB) have adopted the gap filler technology so as to receive satellite broadcasting under a non-LOS condition.

A gap filler system using the gap filter technology functions as a small-output repeater station for receiving radio waves from a transmitter station and repeating the received radio waves such that broadcasting can be received in a blanket area where the radio waves are intercepted by tall buildings under the satellite broadcasting or mobile communication condition. For example, in the direct broadcast satellite (DBS) system, a small-output repeater station is installed on the roof of a building and thereby repeats the radio waves that are output by a terrestrial transmitter station or a satellite so that a moving object may receive a high quality of sound signals in the blanket area by using the characteristic of orthogonal frequency division multiplexing (OFDM) of the multi-carrier modulation system. In this instance, a receiver receives the repeated waves when it cannot receive direct waves, and receives the direct waves and the repeated waves when it can receive the direct waves, thereby receiving a high quality of sound signals.

By using the gap filler technology, since the received signals are amplified or transmitted through frequency conversion in a uni-direction in the satellite broadcasting or mobile communication condition, at least one unit module that is included in the gap filler system is always turned on. Since the unit module of the gap filler system is always turned on to be operated, power consumption and noises are increased and the life cycle thereof is shortened.

### SUMMARY OF THE INVENTION

The present invention has been made in an effort to provide a device and method for reducing power consumption in a gap filler system.

An exemplary embodiment of the present invention provides a device of reducing power consumption in a gap filler system. The device includes a plurality of unit modules receiving a signal from a terminal and determining whether the terminal is provided within beam coverage, and a main module controlling at least one unit module, one of which is a first unit module with the beam coverage in which the terminal is provided from among the plurality of unit modules, to be turned on and controlling other unit modules other than the turned-on unit module to be turned off.

Another embodiment of the present invention provides a method of reducing power consumption in a gap filler system including a plurality of unit modules. The method includes detecting a first unit module with first beam coverage in which a terminal is provided from among the unit modules, controlling the first unit module and a second unit module with second beam coverage near the first beam coverage of the first unit module to be turned on, and controlling unit modules other than the first and second turned-on unit modules to be turned off.

### BRIEF DESCRIPTION OF THE DRAWINGS

FIG. 1 shows a power consumption reducing device of a gap filler system according to an exemplary embodiment of the present invention.
FIG. 2 is a detailed block diagram of a power consumption reducing device of a gap filler system shown in FIG. 1.
FIG. 3 shows an example of installing a gap filler system according to an exemplary embodiment of the present invention.
FIG. 4 is a flowchart for reducing power consumption in a gap filler system according to an exemplary embodiment of the present invention.

### DETAILED DESCRIPTION OF THE EMBODIMENTS

In the following detailed description, only certain exemplary embodiments of the present invention have been shown and described, simply by way of illustration. As those skilled in the art would realize, the described embodiments may be modified in various different ways, all without departing from the spirit or scope of the present invention. Accordingly, the drawings and description are to be regarded as illustrative in nature and not restrictive. Like reference numerals designate like elements throughout the specification.

Through the specification, unless explicitly described to the contrary, the word "comprise" and variations such as "comprises" or "comprising" will be understood to imply the inclusion of stated elements but not the exclusion of any other elements. In addition, the terms "-er", "-or" and "module" described in the specification mean units for processing at least one function and operation and can be implemented by hardware components or software components and combinations thereof.

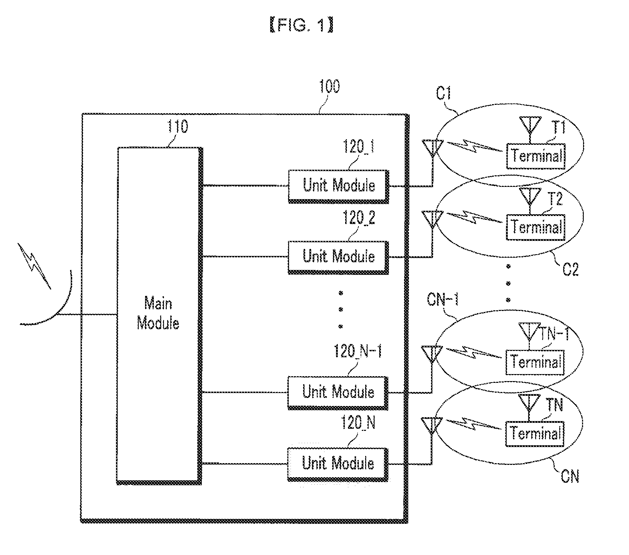

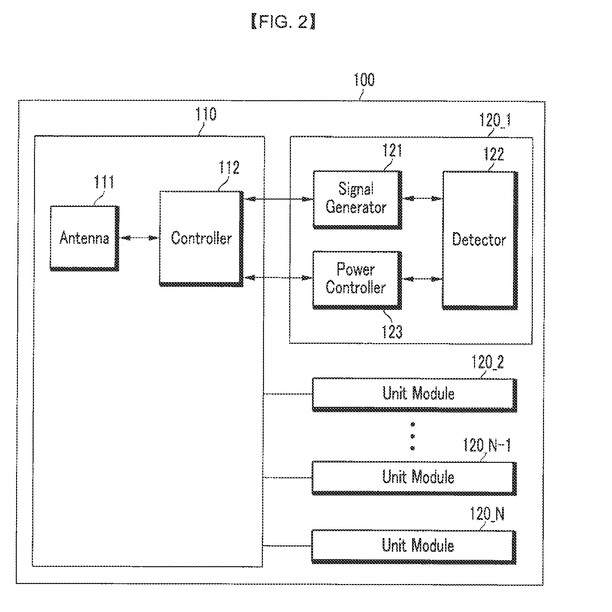

Referring to FIG. 1 and FIG. 2, a power consumption reducing device of a gap filler system according to an exemplary embodiment of the present invention will now be described.

FIG. 1 shows a power consumption reducing device of a gap filler system according to an exemplary embodiment of the present invention, and FIG. 2 is a detailed block diagram of a power consumption reducing device of a gap filler system shown in FIG. 1.

As shown in FIG. 1, the power consumption reducing device 100 of the gap filler system includes a main module 110 and a plurality of unit modules 120_1 to 120_N.

The main module 110 transmits/receives signals, for example, satellite communication signals of the Ka band (about 20 to 30GHz) and broadcasting signals of the Ku band (about 12 to 18GHz), and the unit modules 120_1 to 120_N transmit the signals transmitted by the main module 110 to the terminals T1 to TN which are provided within beam coverages C1-CN, respectively.

It is difficult to reduce power consumption of the gap filler system when a fixed or mobile terminal is always provided within the beam coverages C1-CN formed by the unit modules 120__1 to 120_N in the gap filler system according to the exemplary embodiment of the present invention.

However, in the case of transmitting/receiving signals through an antenna in the long blanket area under a wide non-LOS area, such as a subway, a tunnel, and a mountain, or in the case of a temporally or spatially discontinuous number of terminals for transmitting/receiving signals through the gap filler system, it is easy to reduce power consumption of the gap filler system. That is, when the number of terminals for transmitting/receiving signals through the gap filler system is temporary or spatially less, power consumption reducing efficiency is increased in the gap filler system.

As shown in FIG. 2, the main module 110 includes an antenna 111 and a controller 112.

The configurations and driving methods of the unit modules 120_1 to 120_N according to the exemplary embodiment of the present invention are the same for each, the configuration of the power consumption reducing device 100 of the gap filler system will be described by using the unit module 120_1 as an example.

The unit module 120_1 includes a signal generator 121, a detector 122, and a power controller 123.

The detector 122 of the unit module 120_1 uses a reference signal of a terminal received at a gap filler antenna (not shown), for example a pilot signal, to determine whether a terminal, for example a terminal T1, is provided within the beam coverage C1 formed by the unit module 120_1, and transmits a determination result to the signal generator 121. The signal generator 121 generates a signal for indicating that the terminal T1 is provided within the beam coverage C1, and transmits the signal to the main module 110. The detector 122 has determined an existence state of the terminal T1 by using the reference signal of the terminal, but the present invention is not restricted to this, and it can determine the existence state of the terminal T1 by using a detection sensor such as an infrared sensor or a mobile sensor, etc.

When receiving the signal that the terminal T1 has provided within the corresponding beam coverage C1, the controller 112 of the main module 110 generates a signal for turning on at least one unit module 120_1 to 120_N adjacent to the beam coverage C1 in which the terminal T1 is presently positioned and transmits the signal to the power controller 123

Thereby, the power controller 123 of the at least one unit module 120_1 to 120_N turns on the at least one unit module 120_1 to 120_N.

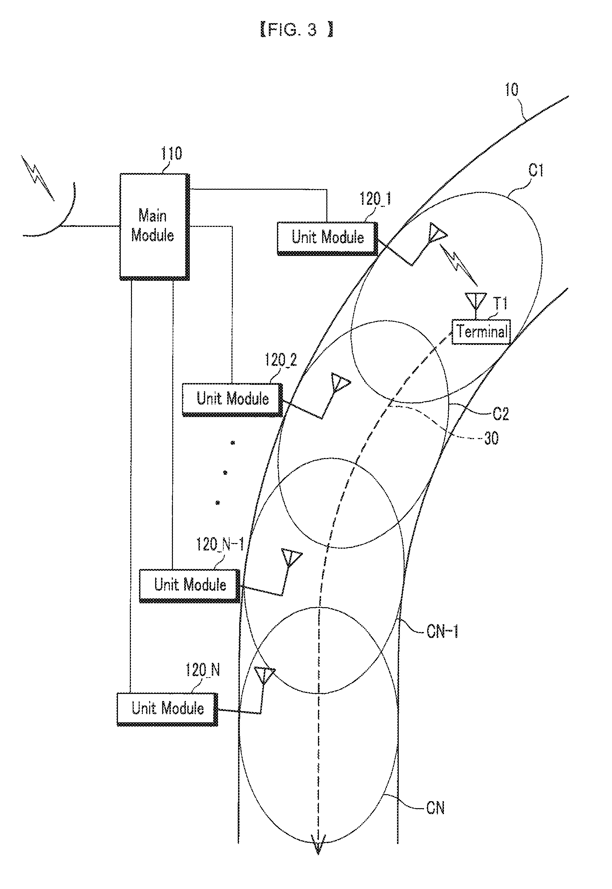

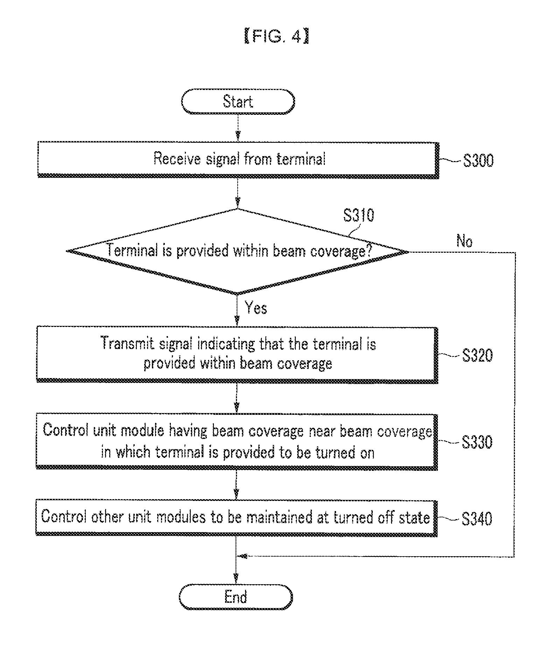

Referring to FIG. 3 and FIG. 4, a method for reducing power consumption in a gap filler system according to an exemplary embodiment of the present invention will now be described.

FIG. 3 shows an example of installing a gap filler system according to an exemplary embodiment of the present invention, and FIG. 4 is a flowchart for reducing power consumption in a gap filler system according to an exemplary embodiment of the present invention.

It is assumed in the gap filler system that the unit modules 120_1 and 120_N installed on both entrances of a tunnel are always turned on to be in the standby mode and that other unit modules 120_2 to 120_N-1 are initially turned off to be in the standby mode so as to determine whether the terminal T1 is provided within each beam coverage C1-CN. That is, as shown in FIG. 3, when the terminal T1 enters one the entrance of the tunnel 10 and moves on a moving path 30 in the dotted line direction, the unit module 120_1 forming beam coverage C1 at the entrance stands by while always being turned on so as to check the entering of the terminal T1 into the tunnel 10.

Thereby, when the terminal T1 moves on the moving path 30, the turned-on unit module 120_1 receives a signal from the terminal T1 in the gap filler system (S300). The unit module 120_1 uses the received signal to determine whether the terminal T1 enters the beam coverage C 1 (S310).

In this instance, when the terminal T1 enters the beam coverage C1 of the unit module 120_1, the unit module 120_1 generates a signal for indicating that the terminal T1 enters the beam coverage C1 of the unit module 120_1 and transmits the signal to the main module 110 (S320).

When receiving the signal from the unit module 120_1, the main module 110 considers the moving path 30 of the terminal T1 to control the at least one unit module 120_2 having beam coverage C2 near the beam coverage C1 of the unit module 120_1 to be turned on the at least one unit module 120_2 (S330).

When the terminal T1 moves on the moving path 30 to be provided within the beam coverage C2 of the unit module 120_2, the main module 110 controls the unit module 120_3 having beam coverage C3 near the beam coverage C2 of the unit module 120_2 in which the terminal T1 is provided to be turned on the unit module 120_3.

When the terminal T1 moves on the moving path 30 to be provided within the beam coverage of the unit module 120_3, the main module 110 controls the unit module 120_2 to be turned off, and controls the unit module 120_4 having beam coverage near the beam coverage of the unit module 120_3 in which the terminal T1 is provided to be turned on the unit module 120_4.

In this manner, the main module 110 controls the on/off states of the unit modules 120_2 to 120_N according to the moving path 30 on which the terminal T1 moves. That is, when the terminal T1 enters the beam coverage C1-CN corresponding to a tuned on unit module 120_1 to 120_N, the main module 110 controls at least one unit module 120_1 to 120_N adjacent to the tuned on unit module 120_1 to 120_N to be turned on, and controls the remaining unit modules 120_1 to 120_N except for the at least one unit module 120_1 to 120_N to be maintained in the turned-off state (S340). At this time, the unit modules 120_1 and 120_N installed on the both entrances of the tunnel 10 and the unit module corresponding to the beam coverage, in which the terminal T1 presently exists are also turned on. Therefore, power consumption can be reduced by not simultaneously using all power of the N unit modules 120_1 to 120_N. For example, [(N-2)/N)] of the entire power consumption can be reduced when power of the two unit modules from among the N unit modules 120_1 to 120_N are used.

Accordingly, by turning on the area in which the terminal is provided and at least one unit module near the same area and turning off other unit modules, undesired receiving and propagation in the area in which no terminal is provided are prevented, thereby reducing unneeded noise from the gap filler system. Further, the entire power consumption used for driving the gap filler system can be reduced, thereby increasing the power saving effect and replacement period of the gap filler system.

According to the exemplary embodiment of the present invention, power consumption and noise of the gap filler system can be reduced by controlling the unit module of the gap filler to be operable when signals need to be transmitted/received.

The above-described embodiments can be realized through a program for realizing functions corresponding to the configuration of the embodiments or a recording medium for recording the program in addition to through the above-described device and/or method, which is easily realized by a person skilled in the art.

While this invention has been described in connection with what is presently considered to be practical exemplary embodiments, it is to be understood that the invention is not limited to the disclosed embodiments, but, on the contrary, is intended to cover various modifications and equivalent arrangements included within the spirit and scope of the appended claims.

## Claims

1. A device of reducing power consumption in a gap filler system, the device comprising:
a plurality of unit modules receiving a signal from a terminal, and determining whether the terminal is provided within beam coverage; and
a main module controlling at least one unit module, one of which is a first unit module with the beam coverage in which the terminal is provided from among the plurality of unit modules, to be turned on and controlling other unit modules other than the turned-on unit module to be turned off.

2. The device of claim 1, wherein the at least one unit module further comprises at least one second unit module having beam coverage near the beam coverage of the first unit module.

3. The device of claim 2, wherein the main module determines the second unit module by considering a moving path of the terminal.

4. The device of claim 1, 2, or 3, wherein each unit module comprises:
a detector receiving the signal from the terminal and determining whether the terminal is provided within beam coverage formed by each unit module; and
a power controller controlling power on/off states according to a control signal transmitted from the main module.

5. The device of claim 4, wherein each unit module further comprises a signal generator generating a signal for indicating that the terminal is provided within the beam coverage formed by each unit module and transmitting the signal to the main module.

6. The device of claim 4 or 5, wherein the detector comprises at least one of a gap filler antenna for receiving a reference signal from the terminal and a sensor for sensing the terminal.

7. A method of reducing power consumption in a gap filler system having a plurality of unit modules, the method comprising:
detecting a first unit module with first beam coverage in which a terminal is provided from among the unit modules;
controlling the first unit module and a second unit module with second beam coverage near the first beam coverage of the first unit module to be turned on; and
controlling unit modules other than the first and second turned-on unit modules to be turned off.

8. The method of claim 7, further comprising determining the second unit module by considering the moving path of the terminal.

9. The method of claim 7 or 8, wherein the detecting of the first unit module comprises detecting the first unit module by using a reference signal transmitted from the terminal.

10. The method of claim 7, 8 or 9, wherein the detecting of the first unit module comprises detecting the first unit module by using a sensor provided to each of the unit modules.
